# EUROPEAN PATENT SPECIFICATION

(11) **EP 0 543 024 B1**
(45) Date of publication and mention of the grant of the patent: **02.09.1998**
(21) Application number: 92911460.1
(22) Date of filing: 05.06.1992
(51) Int. Cl.: G06F 7/52

(54) **DIVIDER**
DIVISOR
APPAREIL DIVISEUR

(30) Priority: 07.06.1991 JP 136639/91
(43) Date of publication of application: 26.05.1993
(73) Proprietor: FUJITSU LIMITED, Kawasaki-shi, Kanagawa 211 (JP)
(72) Inventor: KUROIWA, Koichi, Kawasaki-shi Kanagawa 211 (JP)
(74) Representative: Stebbing, Timothy Charles
(86) International application number: PCT/JP92/00725
(87) International publication number: WO 92/22027

(56) References cited:
- JP-A-60 054 045
- JP-A-61 007 939
- IBM TECHNICAL DISCLOSURE BULLETIN. vol. 30, no. 6 , November 1987 , NEW YORK US pages 415 - 419 AN. 'RADIX 16 DIVIDER' *

## Description

### Field of the Invention

The present invention relates to a high cardinal number type non-restoring divider and more specifically to a divider itself or a floating point type coprocessor or vector processor including a divider.

### BACKGROUND OF THE INVENTION

Division is generally considered, in conception, as an inverse processing of multiplication but is different in many points as the multiplication. First, the prior- and post-processings are not independent and conducted sequentially. In the divisions, since all partial products can be obtained simultaneously, processings are not conducted sequentially and therefore extra arithmetic cycles are required for the divisions in comparison with the multiplication. Second, division is not a deterministic processing but a trial-and-error processing. That is, a predicted processing of a partial quotient is required in the process of repetitive arithmetic operations. For example, a digit selection rule for selecting each digit of a series quotients from aggregation of digits is used.

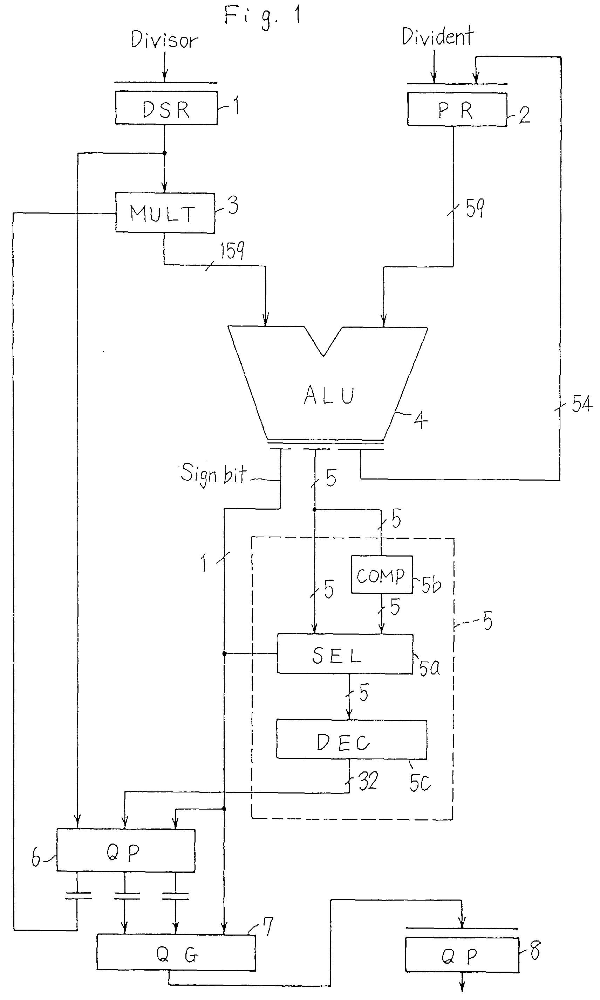

Fig. 1 is an block diagram of a conventional divider, showing an example of a high cardinal number non-restoring divider. Here, the system of division can be classified into restoring division and non-restoring division from the difference of digit aggregation. The restoring division is essentially the same as the division by manual arithmetic operation and can easily be realized, but sometimes requires longer executing time if a large number of 0 exists within the digits of quotient. It is because the processing (addition) for restoring a partial remainder is additionally required if a negative partial remainder exists. Meanwhile, the non- restoring division is not required to restore a negative remainder to a positive remainder, so long as an absolute value of remainder is smaller than divisor and is superior in the point that such extra addition is not required. Such division method is explained, for example, in the "Computer Arithmetic PRINCIPLES, ARCHITECTURE, AND DESIGN" Kai Hwang, issued by John Wiley & Sons, Inc., Chapter 7. Japanese Patent Laid-Open No. 61-7939 (Laid-Open Date: Jan. 14, 1986, "HIGH CARDINAL NUMBER TYPE NON-RESTORING DIVIDER") discloses a non-restoring divider where two decodings take place of the difference between the most significant bits of the partial remainder and the multiple general.

The correct decoding is selected by the carry-out of the difference between the corresponding least significant bits.

A high cardinal number type non-restoring divider uses a cardinal number which is larger than 2 (high cardinal number) and can quickly reduce the number of times of repetitive processings which are required for execution of the division instruction with increase of the cardinal number and thereby curtails the executing time.

In Fig. 1, the reference numeral 1 denotes a divisor register; 2, a divident register; 3, a multiple generator; 4, an adder/subtractor; 5, a complement generator; 6, a quotient predicting means; 7, a quotient compensating means; 8, a quotient register. As the quotient predicting means 6, only one unit corresponding to a positive or negative partial remainder is provided for the purpose of reduction of circuit scale.

A general flow of arithmetic processing is as follow: ① content of the divident register 1 (DSR) is multiplied by m (m is a multiple generated in the multiple generator 3), ② m x DSR and content (PR) of the divident register 2 are added, ③ any one of significant n-bit (hereinafter, preferentially n = 5) of addition result except for the sign bit or an output of the complement converting circuit 5b (obtained by complement conversion of the significant 5 bits except for the sign bit of addition result) is given to a decoder 5c (detail structure will be explained in the column of "PREFERRED EMBODIMENT OF THE INVENTION"). For example, when the sign bit is 0 (positive sign), the 5 bits of addition result are given in direct and when the sign bit is 1 (negative sign), a complement is given. And, a series of operations for generating a quotient predicting signal based on an output of the decoder 5c and content of divident register 1 to determine a partial quotient are repeated for each digit.

However, such a conventional divider employs a structure for uniquely selecting addition result (significant 5 bits except for the sign bit) or the same addition result after complement conversion depending on the sign bit of the same addition result. Therefore, since the decoding process cannot be started until the sign bit is determined, here rises a problem that a delay time (t a , temporarily defined for the convenience of explanation) until the sign bit of the addition result is determined from the timing when the significant 5 bits except for the sign bit of the addition result are determined is inevitably added to the processing time (tβ, temporarily defined also for the convenience of explanation) of the decoder 5c. Particularly, such delay time becomes very large in a vector processor which repeats divisions many times.

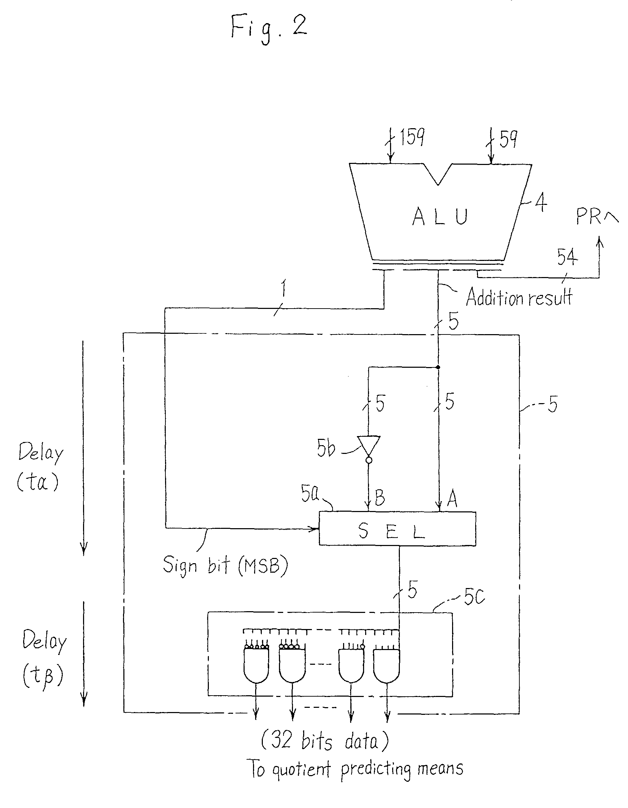

Fig. 2 shows a practical circuit diagram of the complement generator 5. The addition result of 5 bits except for the sign bit is given to an input A of a selector 5a in the direct logic and is also applied to the input B by an inverter (complement converting circuit 5b) through the logical inversion (namely, complement conversion). Selection of the inputs A and B depends on the most significant bit (sign bit) of the addition result and therefore when the sign bit is 0, the input A is selected, while when the sign bit is 1, the input B is selected.

Here, all bits of addition result are determined after transfer of carry to the most significant bit (generally, the sign bit) and an output of the selector 5a, that is, an input to the decoder 5c is determined at least after the time corresponding to the maximum value of carry transfer in the adder/subtractor 4. However, since data is given to the inputs A and B of the selector 5a before the time corresponding to the maximum value of carry transfer, if delay by wiring or delay by inverter 5b may be neglected, a useless delay time (tα ) corresponding to the period until the sign bit of the addition result is determined from the timing when the 5 bits of addition result except for the sign bit are determined is generated.

The present invention has been proposed considering such technical problem and it is therefore an object of the present invention to further curtail the arithmetic operation time by absorbing useless delay time (tα ) generated in the carry transfer with a decoding time (tβ).

### DISCLOSURE OF THE INVENTION

In order to attain the object explained above, a divider of the present invention comprises the features set out in claim 1.

More preferentially, the decoding means comprises a plurality of output terminals, a decoder for decoding the arithmetic result to provide a plurality of outputs and a selecting means which is connected between a plurality of output terminals and the decoder and is controlled responsive to the sign bit. The selecting means switches the connection between a plurality of outputs of the decoder and a plurality of output terminals so that any one of decoding signal of the arithmetic result and a decoding signal of the complement of the arithmetic result may be outputted depending on the sign bit. In the case of the present invention, the decoding process can be started without waiting for determination of the most significant bit (sign bit) of the arithmetic result and thereafter the decoding result is selected by the most significant bit (sign bit) upon determination thereof. Therefore, useless delay time (tα ) generated by carry transfer can be absorbed by the decoding time (tβ ) and thereby further curtailment of the arithmetic processing time can be realized.

### BRIEF DESCRIPTION OF THE DRAWINGS

Fig. 1 is a block diagram of a prior art;
Fig. 2 is a structural diagram of the essential portion of a prior art;

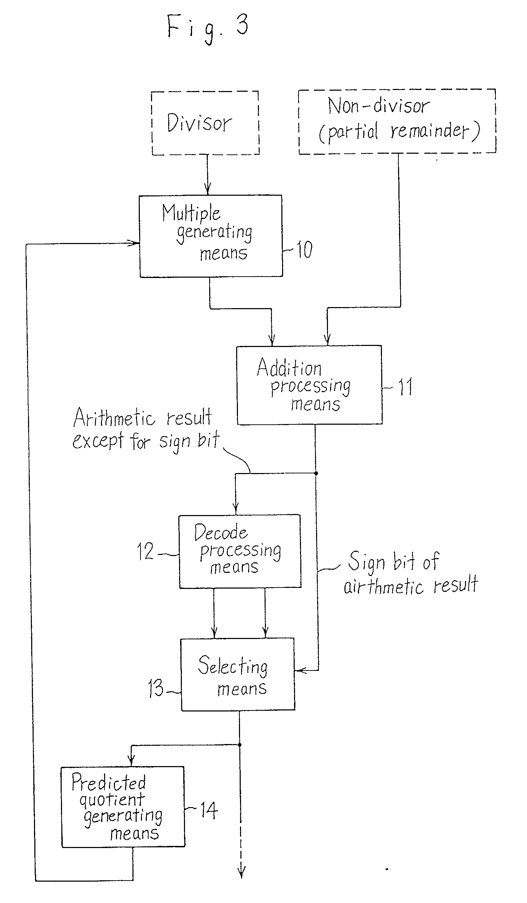

Fig. 3 is a principle diagram of the present invention;
Fig. 4 is a total structural diagram of a vector processor to which the present invention is applied;
Fig. 5 is a block diagram of a dividing circuit (DIV) shown in Fig. 4.
Fig. 6 is a block diagram of a mantissa divider of Fig. 5;
Fig. 7 is a concept structural diagram of a multiple generator of Fig. 6;
Fig. 8 is a block diagram of an adder/subtractor of Fig. 6;
Fig. 9 is a block diagram of CPA of Fig. 8;
Fig. 10 is a structural diagram of a block of Fig. 9;
Fig. 11 is a structural diagram of a selector ofthe selector group of Fig. 6;
Fig. 12 is a predicting table diagram of a quotient forecasting means (QP) of Fig. 6;
Fig. 13 is a signal generating table diagram of a quotient predicting means (QP) of Fig. 6;
Fig. 14 is a correcting condition table diagram of a quotient correcting means (QP) of Fig. 6; and
Fig. 15 is a timing chart for comparison of delay times between the prior art and the present invention.

### PREFERRED EMBODIMENT OF THE INVENTION

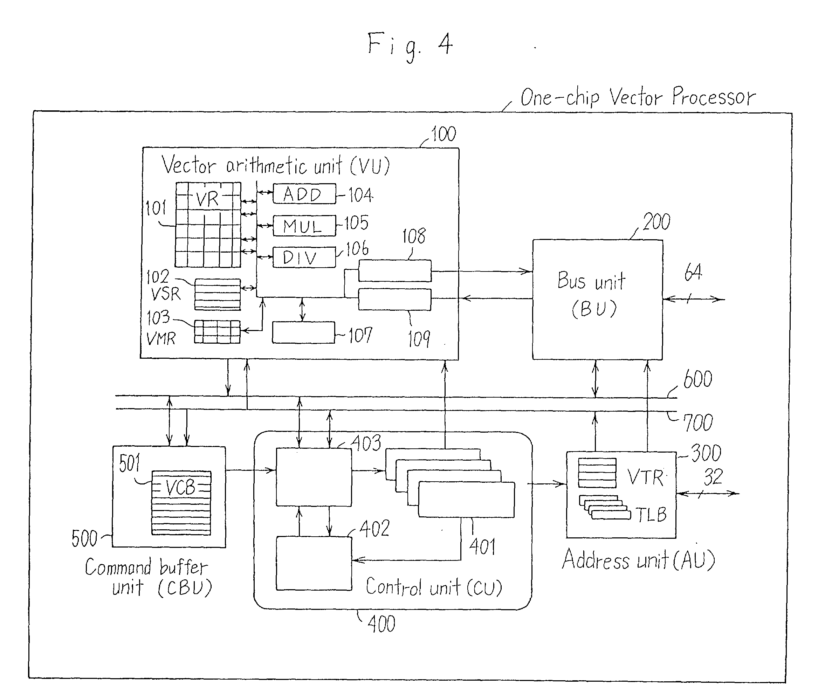

A divider of the present invention may be used, for example, in a vector processor of which total structural diagram is shown in Fig. 4. In the vector processor, the division is required to be repeated at a high speed for extremely many times for only one command. Therefore, the present invention can provide such a very distinctive effect as curtailing the one division cycle.

In Fig. 4, the vector processor is composed of a vector arithmetic unit (VU) 100, a bus unit (BU) 200, an address unit(AU) 300, a control unit and a command buffer unit (CBU) 500. These units are mutually connected with data bus 600 and address bus 700.

The vector arithmetic unit 100 comprises a vector register (VR) 101 for storing vector data, a scalar register (VSR) 102 for storing scalar data, a vector mask register (VMR) 103 for storing mask data, an addition circuit (ADD) 104, a multiplication circuit (MUL) 105, a division circuit (DIV) 106, a mask data generating circuit 107, a data fetching latch 108 and a data output latch 109. The division circuit 106 corresponds to a divider of the present invention.

The bus unit 200 is provided for mediating input and output of data having the 64-bit width, while the address unit 300, for mediating input and output of address having the 32-bit width. The control unit 400 comprises a pipeline controller 401, a score board 402 and a decoding unit 403 for realizing control of vector processor operations and the command buffer unit 500 is provided for storing the comomands required for arithmetics within a vector command buffer (VCB) 501 having the capacity of about 1 k-byte. A vector translation register (VTR) within the address unit 300 and a conversion index buffer (TLB) are used during the conversion from the virtual address to the real address.

In a vector processor having the structure explained above, arithmetic data is read from an external memory based on the address generated in AU 300 depending on the load instruction and is then stored in VR 101 through the data fetching latch 108 of VU 101.

When an instruction is stored in VCB 501, "1" is written in the start bit of the command start register (not illustrated) within CU 400 and this CU 400 sends the instruction of VCB 501 to the decoding unit 403. The decoding unit 403 decodes the instruction to detect to which pipeline of VU 100 it belongs and then sends the result to VU 100. This decoding is carried out for each cycle and the arithmetic operation is also started for each cycle. In this case, different arithmetic units may have the same vector register 101 in common. But, it is checked by the pipeline controller 401 and score board 402 in CU 400 in order to avoid common use. The started arithmetic unit (ADD 104, MULT 105, DIV 106 or mask data generating circuit 107) executes the specified arithmetic processings and the result of arithmetic operation is written in an external memory depending on the store instruction.

Here, the arithmetic processing of VU 100 is classified into the load/store pipeline processing, mask pipeline processing, graphic pipeline processing, addition/subtraction pipeline processing, multiplication pipeline and division pipeline processing.

The mask pipeline processing is executed by the mask data generating circuit 107 for exchanging with the vector register 103 the data for which arithmetic operation is deleted. Moreover, the graphic pipeline processing is the pipeline processing of graphic data and is selectively executed by the addition circuit 104 in combination with the addition/subtraction pipeline processing. In addition, the multiplication pipeline processing is executed by the multiplication circuit 105 and the division pipeline processing is executed by the division circuit 106. Therefore, the division pipeline processing can be executed, for example, in parallel with the addition/subtraction pipeline processing and multiplication pipeline processing.

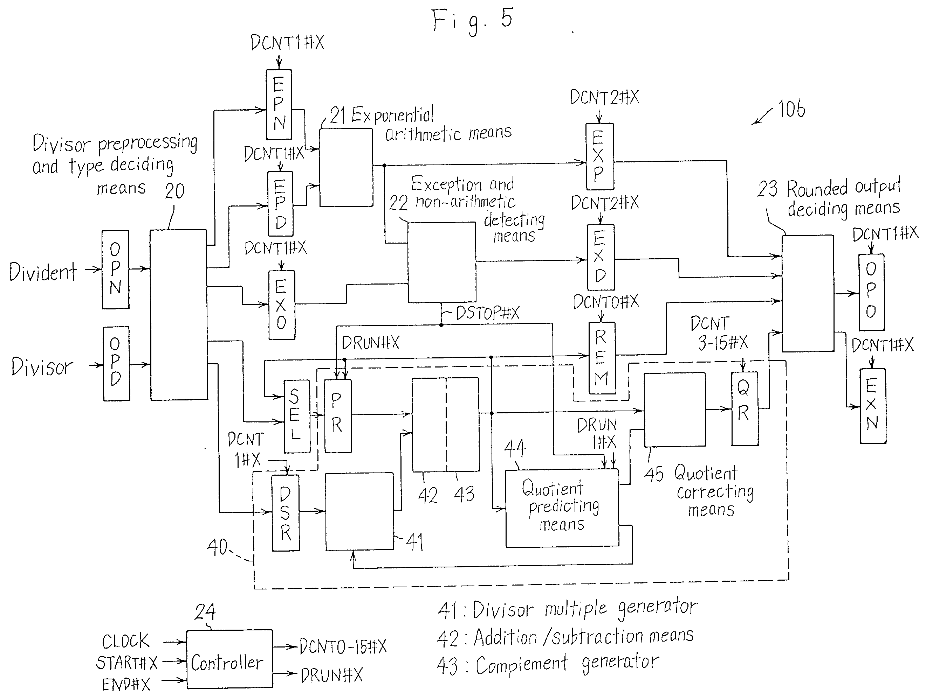

Next, the structure and operation of the division circuit (DIV) 106 to which the divider of the present invention is applied will be explained with reference to Fig. 5.

The division circuit 106 executes the floating point division based on the IEEE standards and comprises a division preprocessing and type deciding means 20, an exponential arithmetic means 21, an exception and non-arithmetic detector 22, a rounded output deciding means 23, a controller 24 and a mantissa divider 40. Each circuit will be explained in detail with an example of the floating point double accuracy arithmetic processings based on the IEEE standards.

The type deciding means of the division preprocessing and type deciding means 20 decides a type of divisor D and divident N being set respectively to the input registers OPD and OPN, that is, no numerical character, zero, infinitive or denormal, etc. and sets the result of decision to a type deciding flag register EXC. Moreover, the preprocessing means respectively extracts the sign S (1 bit), exponential part EXP (11 bits) and mantissa part M (52 bits) concerning the floating point data of divisor D and a divident N, recovers hidden bits of the mantissa part M (the IEEE standards normalize that the mantissa part M has a hidden one bit as the higher one bit of the most significant bit) and also sets the absolute value of the mantissa part of a divident N.

The processing of such preprocessing means can be realized, for example, by extracting the mantissa parts of divisor D and divident N being set to OPD and OPN to recover the hidden bit, thereafter comparing these two data to execute nothing when the absolute value of the mantissa part of the divident N is smaller than the absolute value of the mantissa part of the divisor D or to shift the mantissa part of the divident N for one bit to the right (one bit is reduced) when the absolute value of mantissa part of the divident N is larger than the absolute value of the mantissa part of the divisor D and by incrementing the exponential part EXP of the divident N by one (+1). After this preprocessing, the exponential part of the divident N is set to the register EPN, while the mantissa part of the divident N to the partial remainder register PR and the register EPD for the exponential part of divisor D, and the mantissa part of the divisor D to the divisor D register DSR, respectively.

Next, in the exponential arithmetic means 21, subtraction of exponential value and addition of bias value are executedd. That is, the three values of a complementary value of the exponential part of the divisor D, a value of exponential part of the divident N and a bias value specified by the IEEE standards are added and a result is set to the register EXP.

Moreover, in the exception and non-arithmetic detector 22, decision of exception and non-arithmetic processing are detected. The decision of exception includes exception of zero division and exception of invalid operation, etc. and these exceptions are decided from the data of divisor D and divident N. As the non-arithmetic processing patterns, following combinations are considered on the basis of the IEEE standards. The patterns are decided from the data of divisor D and divident N and controls are carried out so as to output the stop signal DSTOP#X and generate the specified patterns through the OR processings of the following combinations.$\text{SNaNö SNaN QNaNö SNaN INF ö SNaN NORM ö SNaN ZERO ö SNaN}$$\text{SNaNöQNaN QNaNöQNaN INF ö QNaN NORM ö QNaN ZERO ö QNaN}$$\text{SNaNöINF QNaNöINF INF ö INF NORM ö INF ZERO ö INF}$$\text{SNaNö ZERO QNaNöZERO INF ö ZERO NORM ö ZERO ZERO ö ZERO}$$\text{SNaNöNORM QNaNöNORM INF ö NORM NORM ö NORM ZERO ö NORM}$

Here,
SNaN : Signaling NOT Number
QNaN : Quiet NOT Number
INF : Infinitive
ZERO : Zero
NORM : Number of normalized values
   (From IEEE 754-1985 standards)

The stop signal DSTOP#X is active until it is negated at the end of the one arithmetic operation after it is asserted with decision of data of the divisor D and divident N. The the signals other than DSTOP#X have the following significance.
START#X: This signal instructs start of operations of the division circuit 106 as a whole and is generated by the control unit (CU) 400 shown in Fig. 4.
END#X : This signal instructs stop of operations of the division circuit 106 as a whole and is generated by the control unit (CU) 400 shown in Fig. 4.
DRUN#X: This signal instructs start and stop of repetitive dividing processings which are conducted by the partial remainder register PR, addition/subtraction means 42, complement generator 43, quotient predicting means 44 and divisor/multiple generator 41. Start of operation is instructed synchronously with the next clock after generation of the signal START#X and stop of operation is instructed synchronously with stop of clock signal responsive to the signal END#X.
DCNT0#X ~ DCNT15#X: These signals are generated synchronously with the next clock after generation of the signal START#X to control the operation timing of each register of the division circuit 106 (EPN, EPD, EXO, DSR, EXP, EXD, REM, QR, OPO and EXN). These signal are structured by 16 kinds of clocks signals in total from the signal DCNT0#X generated first to the signal DCNT15#X generated finally.

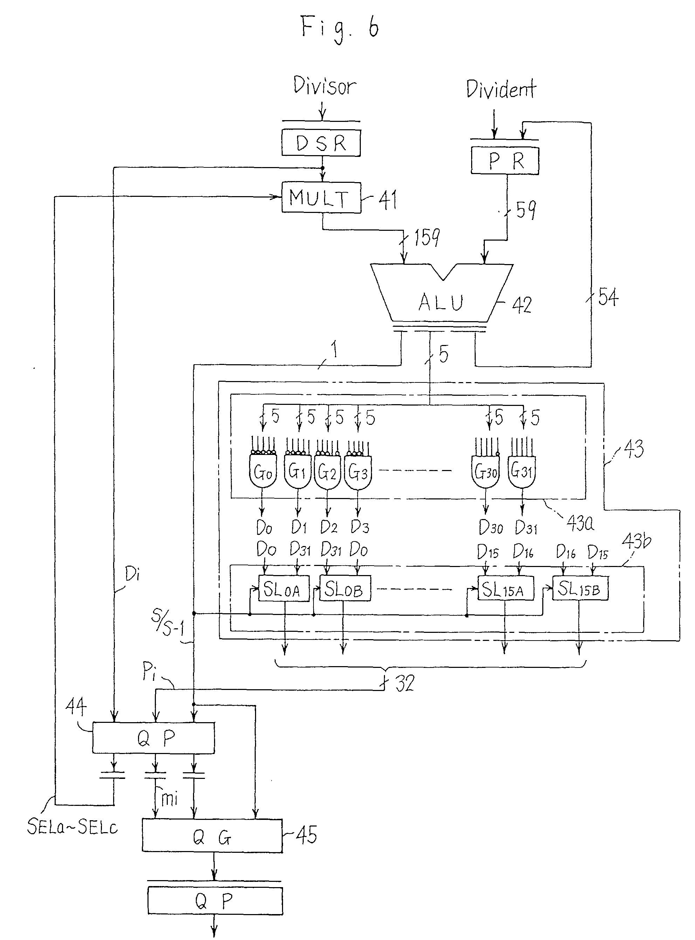

Next, the mantissa divider 40 executes divisions based on the non-restoring division method using a cardinal number 16. This mantissa divider 40 comprises a divisor/multiple generator (hereinafter referred to as multiple generator) 41, an addition/subtraction means 42, a complement generator 43, a quotient predicting means 44 and a quotient correcting means 45 and also includes a divisor register DSR, a divident register PR and a quotient register QR. The detail structure of this mantissa divider 40 is shown in Fig. 6. In Fig. 6, the multiple generator 41 is indicated by an abbreviated code name as MULTI, the addition/subtraction means 42 as ALU, the quotient predicting means 44 as QP and the quotient correcting means 45 as QG.

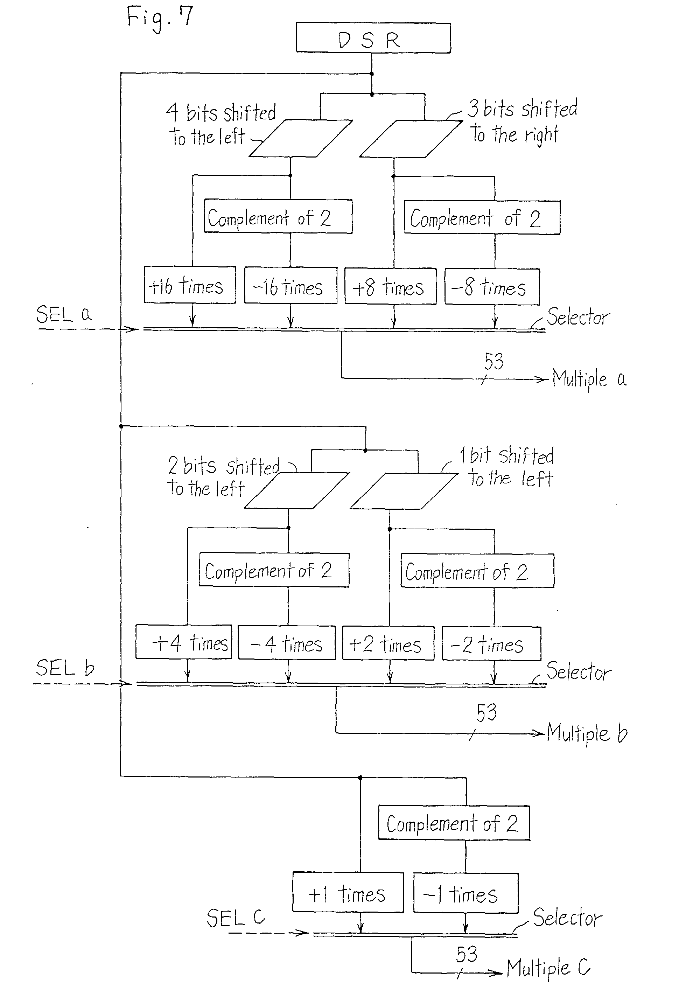

In this embodiment, since the cardinal number is 16, 30 kinds of divisor and multiple data of -15 x divisor, -14 x divisor, ...., -1 x divisor, +1 x divisor, ...., +14 x divisor, +15 x divisor are required. The multiple generator 41 is provided to generate such divisor/multiple data. As the conceptional diagram thereof is shown in Fig. 7, this multiple generator 41 is composed of a first block 41a for generating any one multiple (hereinafter called a multiple a) among +16 times, -16 times, +8 times or -8 times depending on the predetermined multiple selection signal SELa (generated by the quotient predicting means 44), a second block 41b for generating any one multiple (hereinafter called a multiple b) among +4 times, -4 times, +2 times or -2 times depending on the predetermined multiple selection signal SELb and a third block 41c for generating any one multiple (hereinafter called a multiple c) among +1 times or - 1 times depending on the predetermined multiple selection signal SELc.

The multiple generating operation of the first block 41a will be explained as the typical example. First, the +16 times data obtained by shifting the data in the divisor register DSR to the left by four bits (four digits are carried up), -16 times data obtained by taking a complement of data shifted to the left by four bits, +8 times data obtained by shifting the data in the divisor register DSR to the left by three bits (three bits are carried up) and -8 times data obtained by taking a complement of the data shifted to the left by three bits are generated and any one of these data is selected by the selector operating depending on the content of SELa.

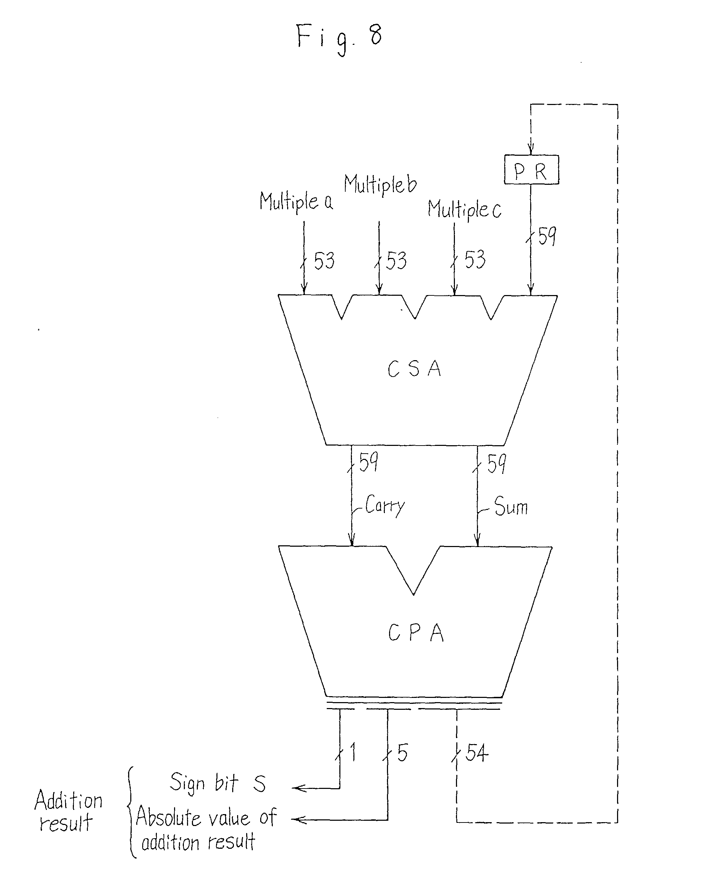

The addition/subtraction means 42 comprises, as shown in Fig. 8, a 4-input carry save adder CSA and a carry propagation adder CPA for adding carry and sum outputted from CSA and outputs a result of addition consisting of the sign bit S of MSB (most significant bit) and the significant five bits except for this sign bit by subtracting a sum of the multiples a, b and c from content of the partial divisor register PR. The sifinificant five bits except for the sign bit S are called hereinafter an "absolute value of addition result".

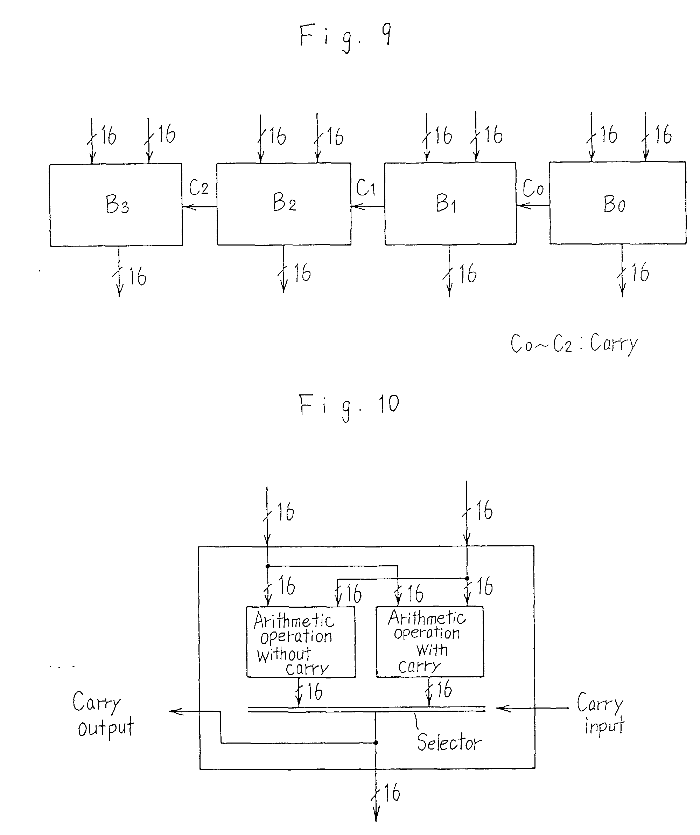

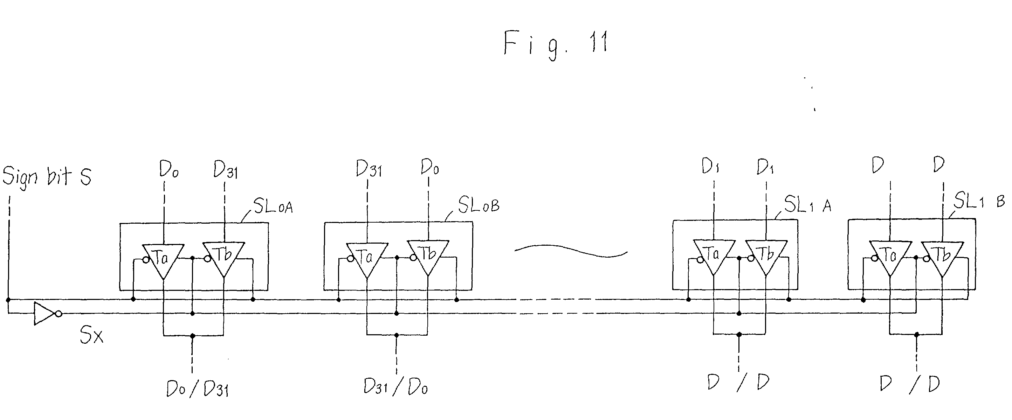

Here, CPA is composed of four blocks B₀ ~ B₃ as shown in Fig. 9 and each block comprises, as the structure thereof is shown in Fig. 10, a part for previously executing arithmetic processings based on the supposition that the carry will be conducted and a part for previously executing arithmetic processings based on the supposition that the carry will not be conducted. Outputs of these arithmetic parts are selected depending on the carry input from the less significant side. According to this process, the carry propagation delay of the other blocks B₁ ~ B₃ except for the least block Bo can be minimized and the arithmetic time of CPA can be set corresponding to the carry propagation delay of the least block Bo. However, naturally the selector delay of each block and wiring delay, etc. are added to such carry propagation delay.

An addition result outputted from the addition/subtractor 42 is the significant six bits among 16 bits of the most significant block B₃. The most significant bit is the sign bit S and the remaining five bits become an absolute value of the addition result. Therefore, during the period from decision of absolute value of the addition result and decision of the sign bit S, a delay time (corresponding to ta ) adding the select delay of each block and wiring delay to the carry propagation delay of the least significant blcok Bo is generated.

The complement generator 43 is composed, as the structure thereof is shown in Fig. 6, of a 5-input AND gate group 43a for decoding the absolute value of the addition result and a selector group 43b consisting of 32 2-input selectors SL_{0A}, SL_{0B}, ~ SL_{15A}, SL_{15B} for selecting the result of decoding depending on the sign bit S. The AND gate group 43a is composed of 32 5-input AND gates G₀ ~ G₃₁ having the same inputs as the number of bits of the addition result and each input of the AND gate is given the five bits data (addition result) having the bit weights of [2⁴, 2³, 2², 2¹, 2⁰]. To the five inputs of each AND gate, the 2⁴ bits, 2³ bits, 2²bits, 2¹ bits and 2⁰ bit are sequentially inputted from the left end to the right end. In this embodiment, only one decoder is used, but it outputs a result of decoding of addition result and a result of decoding of the complement of the addition result by changing correspondence between the decode signals D₀ ~ D₃₁ and the output end of the complement generator 43 with the selector group 43b depending on the sign bit. For example, since the complement of the absolute value "00000 ₍₁₀₎ = 0₍₁₀₎" of addition result is "11111₍₂₎ = 31₍₁₀₎", when the addition result is "00000₍₂₎", it is enough that any one of the decode signal D₀ of the AND gate G₀ and the decode signal D₃₁ of the AND gate G₃₁ is selected by the selector SL_{0A} depending on the sign bit. In the same manner, it is enough when the absolute value is "00001₍₂₎ = 1₍₁₀₎" that any one of the decode signal D₁ and decode signal D₃₀ is selected depending on the sign bit. The 5-input AND gate G₁ outputs the decode signal D₂ when the input is "00010₍₂₎ = 2₍₁₀₎". That is, the decode signals D₃~D₃₁ are respectively outputted by the AND gate G3 when the input is "00011 ₍₂₎ = 3₍₁₀₎", by G₄ when "00100₍₂₎ = 4₍₁₀₎", by G₅ when "00101 ₍ ₂₎ = 5₍₁₀₎", by G₆ when "00110₍₂₎ = 6₍₁₀₎" , by G₇ when "00111₍ ₂₎ = 7₍₁₀₎", by G₈ when "00100₍₂₎ = 8₍₁₀₎", by G₉ when "01001₍ ₂₎ = 9₍₁₀₎", by G₁₀ when "01010₍₂₎ = 10₍₁₀₎", by G₁₁ when "01011₍₂₎ = 11₍₁₀₎", by G₁₂ when "01100₍₂₎ = 12₍₁₀₎", by G₁₃ when "01101 ₍₂₎ = 13₍₁₀₎", by G₁₄ when "01110₍₂₎ = 12₍₁₀₎", by G₁₅ when "01111 ₍₂₎ = 15₍₁₀₎", by G₁₆ when "10000 ₍₂₎ = 16 ₍₁₀₎", by G₁₇ when "10001 ₍₂₎ = 17₍₁₀₎", by G₁₈ when "10010 ₍ ₂₎ =18₍₁₀₎", by G₁₉ when "10011₍₂₎ = 19₍₁₀₎", by G₂₀ when "10100₍₂₎ = 20₍₁₀₎", by G₂₁ when "10101₍₂₎ = 21₍₁₀₎", by G₂₂ when "10110₍₂₎ =22₍₁₀₎", by G₂₃ when "10111₍₂₎ = 23₍₁₀₎", by G₂₄ when "11000₍₂₎ = 24₍₁₀₎", by G₂₅ when "11001₍₂₎ = 25 ₍₁₀₎", by G₂₆ when "11010₍₂₎ = 25₍₁₀₎", by G₂₇ when "11011 ₍ ₂₎ = 27₍₁₀₎", by G₂₈ when "11100₍₂₎ = 28₍₁₀₎", by G₂₉ when "11101₍₂₎ = 29₍₁₀₎", by G₃₀ when "11110₍₂₎ = 30₍₁₀₎", by G₃₁ 1 when "11111₍₂₎ = 31₍₁₀₎". The selector group 43b comprises 32 selectors SL_{0A}∼SL_{15A}, SL_{0B}∼SL_{15B} and the decode signal pairs are inputted thereto so as to obtain the results equivalent to the decode result of the absolute value of the addition result and the decode result of complement of the addition result. Namely, a pair of decode signals, D₀ and D₃₁, are inputted to the selector SL_{0A}. In the same manner, following pairs of decode signals are inputted to the corresponding selectors.

D₁ and D₃₀, D₂ and D₂₉, D₃ and D₂₈, D₄ and D₂₇, D₅ and D₂₆, D₆ and D₂₅, D₇ and D₂₄, D₈ and D₂₃, D₉ and D₂₂, D₁₀ and D₂₁, D₁₁ and D₂₀. D₁₂ and D₁₉, D₁₃ and D₁₈, D₁₄ and D₁₇, D₁₅ and D₁₆, D₁₆ and D₁₅, D₁₇ and D₁₄, D₁₈ and D₁₃, D₁₉ and D₁₂, D₂₀ and D₁₁, D₂₁ and D₁₀, D₂₂ and D₉, D₂₃ and D₈, D₂₄ and D₇, D₂₅ and D₆, D₂₆ and D₅, D₂₇ and D₄, D₂₈ and D₃, D₂₉ and D₂, D₃₀ and D₁, D₃₁ and D₀.

Thereby, even when only one decoder is used, the result of decoding of the input data and the result of decoding the complements of the input data can be obtained. It is of course possible to provide two kinds of decoders and select outputs of these decoders depending on the sign bit. Fig. 11 is a desirable example of structure of the selectors (for example, SL_{0A}, SL_{0B}∼ SL_{15A}, SL_{15B}). Any one of the D₀ and D₃₁ (D₁₅ and D₁₆ in SL₁₅ ) can be selected by inputting the decode signals D₀ and D₃₁(D₁₅ and D₁₆ in SL₁₅) to two pairs of transfer gates Ta, Tb and selecting only one condition of the on/off operations with the sign bit S and inverted signal Sx thereof.

Here, the complement generator 43 of this embodiment is characterized, first, by that when the absolute value of addition result is determined, the decode processing of such absolute value and the decode processing of the complement of the same absolute value are immediately executed and thereafter two decoded results are selected when the sign bit S is determined. Thereby, delay time in the arithmetic operation (tα ) corresponding to difference between the time when the absolute value of addition result is determined and the time when the sign bit S is determined can be absorbed by the decode processing time (tβ) and particularly such a distinctive effect as remarkably curtailing the processing time of the non-restoring dividing operation which is repeated many times can be ensured. Moreover, it is also characterized, second, by that a pair of the decoding result of the absolute value of the addition result and the decoding result of the complement of the same absolute value can be selected. Thereby, the scale of circuit of the decoding means can be suppressed like the prior art and it is also possible to provide a divider which is just suitable for use in the one-chip vector processor in couple with the first characteristic.

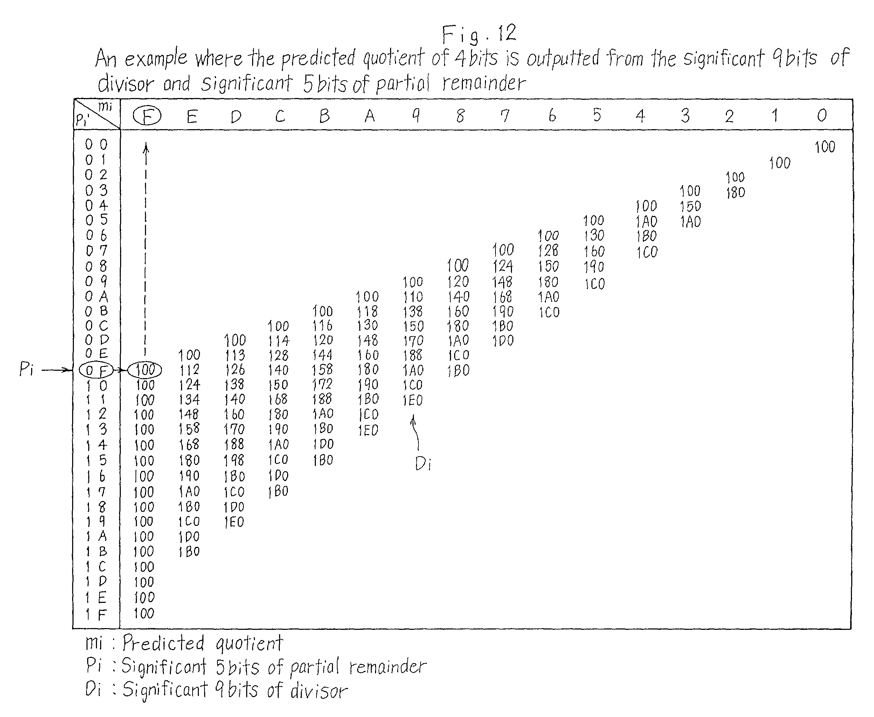

Next, the quotient predicting means 44 is provided with a first function to forecast a patial quotient of each digit based on the 9 significant bits (hereinafter, indicated by Dᵢ) of the divisor D and the significant 5 bits (hereinafter, indicated by P ᵢ) of the partial remainder from the complement generator 43. In this first function, for example, a predicting table as shown in Fig. 12 is used. The predicting table may also be developed in the form of a table map on a memory such as ROM or may be formed with a hard logic. In this case, the latter is desirable from the point of view of the processing rate. In Fig. 12, the referemce values Pᵢ'from "00₍₁₆₎" to "IF₍₁₆₎" corresponding to the significant five bits (Pᵢ) of the partial remainder are given on the vertical axis, while the predicted values of partial quotient (hereinafter, referred to as predicting quotient mᵢ) from "F₍₁₆₎" to "0₍₁₆₎" are given on the horizontal axis. In addition, the reference values Dᵢ' corresponding to combination of Pᵢ and mᵢ are stored at the intersecting points of the line orthogonally crossing the vertical axis and the line orthogonally crossing the horizontal axis. These reference values Dᵢ' are obtained by extracting several values which may be expressed by significant 9 bits (Dᵢ) of the divisor D and then arranging these values in the predetermined order. For example, if Pᵢ = "0F₍₁₆₎" and Dᵢ = "100₍₁₆₎", mᵢ = "F₍₁₆₎" may be predicted as indicated by a broken line in the figure. Moreover, if Dᵢ is "101₍₁₆₎", the minimum value in the range of D₁' ("100₍₁₆₎" ← → "112₍₁₆₎") including "101₍₁₆₎", namely "100₍₁₆₎" is designated and mᵢ = "F₍₁₆₎" is predicted.

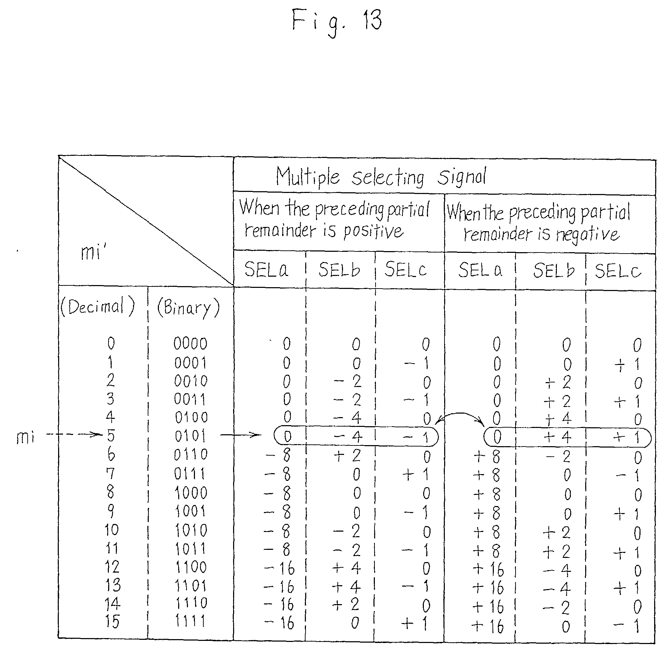

Furthermore, the quotient predicting means 44 is also provided with a second function for generating the multiple selection signals SELa∼ SELc based on the predicted quotient (mᵢ ) predicted by the first function, the preceding sign bit S ₋₁ and the sign bit S of this time. In this second fucntion, for example, a signal generataing table as shown in Fig. 13 is used. In Fig. 13, the reference values mᵢ' from "0₍₁₀₎" to "15₍₁₀₎" corresponding to the predicted quotient mᵢ are given on the vertical axis and the multiple selection signals SELa, SELb, SELc of the cases when S₋₁ ="0", that is, the preceding partial remainder has a positive value and when S = "1", that is, the partial remainder of this time has a negative value are respectively stored for each value of the vertical axis. However, the stored values respectively means the magnifying powers. For example, 0 means 0 times, -1 means -1 times, ....., +16 means +16 times.

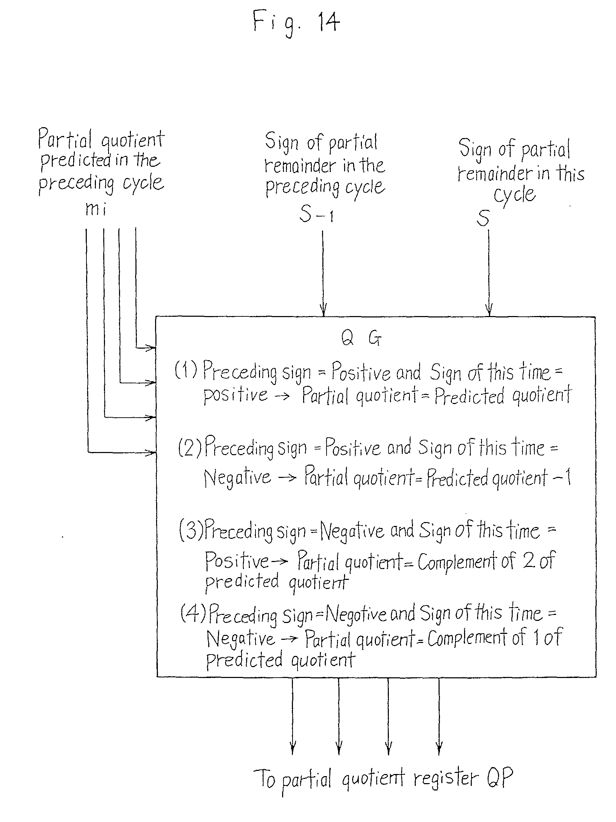

Finally, the quotient correcting means 45 correctsthe predicted quotient mᵢ generated in the quotient predicting means 44 depending on the sign bit (S) of the partial remainder in the repetition of this time and the sign bit (S₋₁) ) in the preceding repetition and then sets such predicted quotient mᵢ to the partial quotient register QP. The actual correction is executed, as its conceptional diagram is shown in Fig. 14, as follow: (1) when S₋₁ == "0" (positive sign) and S = "0" (positive sign), the predicted quotient is set to OP in direct; (2) when S₋₁ == "0" (positive sign) and S = "1"(negative sign), a value obtained by subtracting 1 from the predicted quotient is set to QP; (3) when S₋₁ = "1" (negative sign) and S = "0" (positive sign), a complement of 2 of the predicted quotient is set to QP; (4) when S ₋₁ = "1" (negative sign) and S = "1"(negative sign), a complement of 1 of the predicted quotient is set to QP.

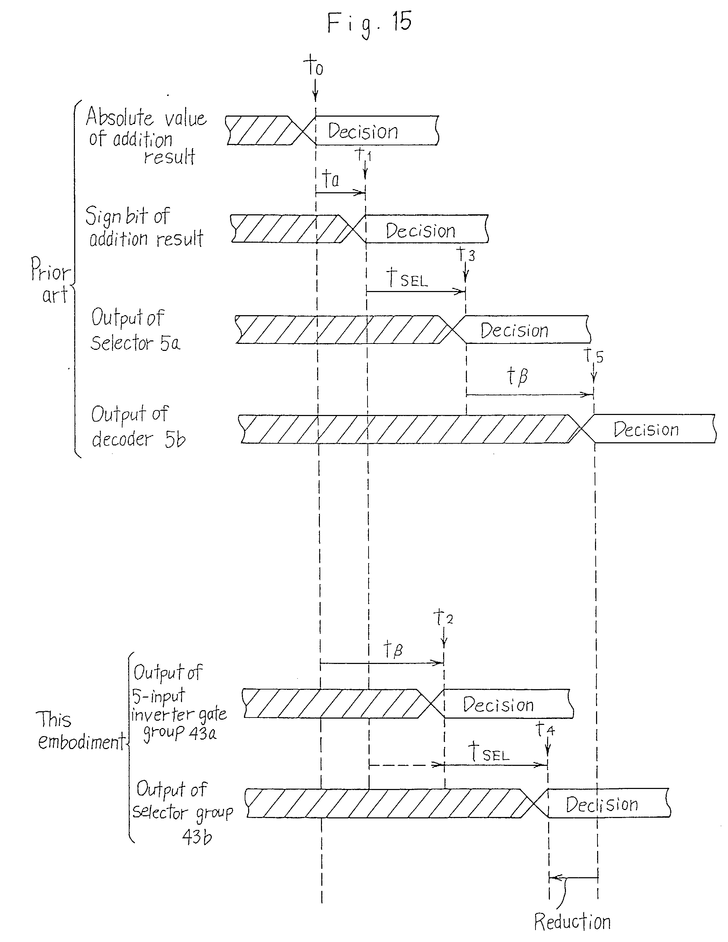

As explained above, in this embodiment, since an absolute value of the addition result generated in the addition/subtraction means 42 and the complement of such absolute value are decoded by a 5-input AND gate group 43a before the sign bit (S) of the addition result is decided and thereafter the one of two decoding results is selected by the selector group 43b when the sign bit (S) is decided, time difference (tα ) between the absolute value of addition result and sign bit generated by carry propagation delay in the addition/subtraction means 42 can be absorbed by the decoding time (tβ). That is, as shown in the timing chart of Fig. 15, the sign bit of the addition result is decided at the timing t ₁ after the time corresponding to tα from the timing to when the absolute value of the addition result is decided. However, the prior art as a disadvantage that since the selecting operation of selector 5a starts from the timing t₁ and moreover operation of the decoder 5b starts from the timing t₃ when the selecting operation is completed, such a longer time as adding the delay time of sign bit (tα ) + selecting operation time (t_{SEL}) + decoding operation time (tβ ) has been consumed until the timing t₅ when the decoding result is outputted.

In this embodiment, on the other hand, since the decoding operation by the 5-input inverter group 43a is started wihtout waiting for decision of the sign bit, such delay time of sign bit tα can be absorbed during the period from the decoding operation starting time (almost matching to the time t₀ when the absolute value of the addition result is decided) to the decoding operation ending time t2 and the total operation delay time can be reduced to such a time as adding the operation delay time (tβ ) of the 5-input AND gate group 43a and the operation delay time (t _{SEL}) of the selector group 43b. Since the selector group 43b starts the operation at the time t₁ when the sign bit is decided, that is, the decoding operation and preparatory operation of the selector progress simultaneously, a part or almost all operation delay (t _{SEL}) of the selector group 43b can be absorbed by the operation delay time (tβ ) of the 5-input AND gate group 43a.

### 7. INDUSTRIAL APPLICABILITY

A divider of the present invention can improve the processing rate on the occasion of generating a partial remainder from the addition result and therefore it is just suitable for use as a divider, for example, of the floating point coprocessor and vector processor which repeats the cyclic procedures like a non-restoring division type divider.

## Claims

1. A non-restoring divider comprising:
a multiple generating means (10) for obtaining multiples of a divisor based on a predicted quotient value;
an arithmetic processing means (11) for outputting as arithmetic result, the difference between said multiples of said divisor and a dividend or a partial remainder and for outputting a sign bit expressing the polarity of said arithmetic result;
a decode processing means adapted to decode during the generation of said sign bit and selectively outputting, based on said sign bit, either the decoded arithmetic result or the decoded complement of said arithmetic result; and
a predicted quotient generating means (14) for generating said predicted quotient value depending on the output of said decode processing means.

2. A non-restoring divider according to claim 1, wherein said decode processing means comprises:
a plurality of output terminals;
a decoder for generating a plurality of outputs by decoding said arithmetic result; and
a selecting means connected between said output terminals and decoder responsive to said sign bit; whereby
said selecting means switches the connections between said plurality of outputs of said decoder and said output terminals based on said sign bit so that either the decoding signal of said arithmetic result or the decoding signal of the complement of said arithmetic result is outputted.

3. A non-restoring divider according to claim 2, wherein said decode processing means (12) comprises a plurality of logic gate circuits for receiving said arithmetic result as a plurality bits outputted from said arithmetic processing means (11) and outputting different decoding logics and wherein said selecting means comprises a plurality of selectors, each for receiving two corresponding outputs among the outputs of said plurality of logic gates as two inputs, and selecting one of said two inputs depending on said sign bit.

4. A non-restoring divider according to claim 2, wherein said selecting means (13) receives the uncomplemented output and the complemented output of said decode processing means (12) and selects the uncomplemented output among said outputs when said sign bit is positive, and selects the complemented output when said sign bit is negative.

5. A non-restoring divider according to claim 1, comprising a quotient correcting means (45) for correcting an output of said predicted quotient generating means (14) based on the sign bit of the arithmetic result and the sign bit of the preceding arithmetic result.

6. A vector processor comprising a non-restoring divider according to claim 1, comprising at least an addition circuit(104), a multiplication circuit (105) and a division circuit (106) for independently executing respective processings of addition, subtraction, multiplication and division which are required for vector arithmemic operations,
wherein said division circuit (106) comprises a division preprocessing and type deciding means (20) for executing preprocessing division and type deciding processing for floating point data of a divisor(D) and a dividend (N), an exponential arithmetic means (21) for executing arithmetic processing of exponential portions in the floating point data of the divisor (D) and dividend (N) preprocessed by said division preprocessing and type deciding means (20), and a mantissa dividing means (40) for generating mantissa data of a quotient by repeatedly processing, based on a predetermined algorithm for the mantissa part in the floating point data of the divisor (D) and dividend (N) preprocessed by said division preprocessing and type deciding means (20).

## Patentansprüche

1. Nicht rückstellbarer Teiler, mit:
einer Vielfach-Generatoreinrichtung (10) zum Ableiten von Vielfachen eines Divisors basierend auf einem vorhergesagten Quotientenwert;
einer arithmetischen Verarbeitungseinrichtung (11) zum Ausgeben der Differenz zwischen den Vielfachen des Divisors und einem Dividenden oder eines Teilrestes als arithmetisches Ergebnis, und zum Ausgeben eines Vorzeichen-Bits, welches die Polarität des arithmetischen Ergebnisses ausdrückt;
einer Dekodier-Verarbeitungseinrichtung, die dafür ausgebildet ist, während der Erzeugung des Vorzeichen-Bits eine Dekodierung durchzuführen und basierend auf dem Vorzeichen-Bit entweder das dekodierte arithmetische Ergebnis oder das dekodierte Komplement des arithmetischen Ergebnisses selektiv auszugeben; und
einer Generatoreinrichtung (14) für einen vorausgesagten Quotienten zum Erzeugen des vorausgesagten Quotientenwertes abhängig von der Ausgangsgröße der Dekodier-Verarbeitungseinrichtung.

2. Nicht rücksetzbarer Teiler nach Anspruch 1, bei dem die Dekodier-Verarbeitungseinrichtung aufweist:
eine Vielzahl von Ausgangsanschlüssen;
einen Dekodierer zum Erzeugen einer Vielzahl von Ausgangsgrößen durch Dekodieren des arithmetischen Ergebnisses; und
eine Wähleinrichtung, die zwischen die Ausgangsanschlüsse und der Dekodiereinrichtung geschaltet ist und auf das Vorzeichen-Bit anspricht; wodurch die Wähleinrichtung die Verbindungen zwischen der Vielzahl der Ausgangsgrößen der Dekodiereinrichtung und den Ausgangsanschlüssen basierend auf dem Vorzeichen-Bit umschaltet, so daß entweder das Dekodiersignal des arithmetischen Ergebnisses oder das Dekodiersignal des Komplements des arithmetischen Ergebnisses ausgegeben wird.

3. Nicht rückstellbarer Teiler nach Anspruch 2, bei dem die Dekodier-Verarbeitungseinrichtung (12) eine Vielzahl von logischen Gatterschaltungen enthält, um das arithmetische Ergebnis in Form einer Vielzahl von Bits zu empfangen, die von der arithmetischen Verarbeitungseinrichtung (11) ausgegeben werden und um verschiedene logische Dekodiergrößen auszugeben, und bei dem die Wähleinrichtung eine Vielzahl von Wählvorrichtungen enthält, wobei jede dieser Wählvorrichtungen zwei entsprechende Ausgangsgrößen unter den Ausgangsgrößen der Vielzahl der logischen Gatter als zwei Eingangsgrößen empfängt und eine der zwei Eingangsgrößen abhängig von dem Vorzeichenbit auswählt.

4. Nicht rückstellbarer Teiler nach Anspruch 2, bei dem die Wähleinrichtung (13) die nicht komplementierte Ausgangsgröße und die komplementierte Ausgangsgröße der Dekodier-Verarbeitungseinrichtung (12) empfängt und die nicht komplementierte Ausgangsgröße unter den Ausgangsgrößen auswählt, wenn das Vorzeichenbit positiv ist, und die komplementierte Ausgangsgröße auswählt, wenn das Vorzeichenbit negativ ist.

5. Nicht rückstellbarer Teiler nach Anspruch 1, mit einer Quotienten-Korrigiereinrichtung (45) zum Korrigieren einer Ausgangsgröße der Generatoreinrichtung (14) für den vorhergesagten Quotienten basierend auf dem Vorzeichenbit des arithmetischen Ergebnisses und dem Vorzeichenbit des vorhergehenden arithmetischen Ergebnisses.

6. Vector-Prozessor, mit einem nicht rückstellbaren Teiler nach Anspruch 1, mit wenigstens einer Addierschaltung (104), einer Multiplizierschaltung (105) und einer Teilerschaltung (106), um unabhängig jeweilige Verarbeitungen gemäß einer Addition, Subtraktion, Multiplikation und Division auszuführen, die für arithmetische Vector-Operationen erforderlich sind,
wobei die Teilerschaltung (106) eine Teilungsverarbeitungs-und Typ-Entscheidungseinrichtung (20) enthält, um eine Vorverarbeitungs-Teilung und eine Typ-Entscheidungsverarbeitung für Gleitkomma-Daten eines Divisors (D) und eines Dividenden (N) auszuführen, eine arithmetische Exponential-Einrichtung (21) enthält, um eine arithmetische Verarbeitung von Exponentialabschnitten an den Gleitkomma-Daten des Divisors (D) und des Dividenden (N) durchzuführen, die durch die Divisions-Vorverarbeitung-und Typ-Entscheidungseinrichtung (20) vorverarbeitet wurden, und eine Mantisse-Teilungseinrichtung (40) enthält, um Mantisse-Daten eines Quotienten zu erzeugen, indem basierend auf einem vorbestimmten Algorithmus für den Mantisse-Teil in den Gleitkomma-Daten des Divisors (D) und des Dividenden (N) eine wiederholte Verarbeitung durchgeführt wird, welche durch die Divisions-Vorverarbeitungs-und Typ-Entscheidungseinrichtung (20) vorverarbeitet wurden.

## Revendications

1. Diviseur à non-rétablissement comprenant :
un moyen de génération multiple (10) pour obtenir des multiples d'un diviseur sur la base d'une valeur de quotient prédite ;
un moyen de traitement arithmétique (11) pour fournir comme résultat arithmétique, la différence entre lesdits multiples dudit diviseur et un dividende (ou un reste partiel et pour fournir un bit de signe exprimant la polarité dudit résultat arithmétique ;
un moyen de traitement de décodage adapté pour décoder pendant la génération dudit bit de signe et pour fournir sélectivement, sur la base dudit bit de signe, soit le résultat arithmétique décodé soit le complément décodé dudit résultat arithmétique ; et
un moyen de génération de quotient prédit (14) pour générer ladite valeur de quotient prédite dépendant de la sortie dudit moyen de traitement de décodage.

2. Diviseur à non-rétablissement selon la revendication 1, dans lequel ledit moyen de traitement de décodage comprend :
une pluralité de bornes de sortie ;
un décodeur pour générer une pluralité de sorties par décodage dudit résultat arithmétique ; et
un moyen de sélection raccordé entre lesdites bornes de sortie et le décodeur sensible audit bit de signe ; où
ledit moyen de sélection commute les raccordements entre ladite pluralité de sorties dudit décodeur et lesdites bornes de sortie sur la base dudit bit de signe pour que, soit le signal de décodage dudit résultat arithmétique, soit le signal de décodage du complément dudit résultat arithmétique est fourni.

3. Diviseur à non-rétablissement selon la revendication 2, dans lequel ledit moyen de traitement de décodage (12) comprend une pluralité de circuits de porte logique pour recevoir ledit résultat arithmétique comme une pluralité de bits fournis par ledit moyen de traitement arithmétique (11) et pour fournir différentes logiques de décodage dans lequel ledit moyen de sélection comprend une pluralité de sélecteurs, chacun pour recevoir deux sorties correspondantes parmi les sorties de ladite pluralité de portes logiques en tant que deux entrées, et pour sélectionner une desdites deux entrées en fonction dudit bit de signe.

4. Diviseur à non-rétablissement selon la revendication 2, dans lequel ledit moyen de sélection (13) reçoit la sortie non complémentée et la sortie complémentée dudit moyen de traitement de décodage (12) et sélectionne la sortie non complémentée parmi lesdites sorties lorsque ledit bit de signe est positif, et sélectionne la sortie complémentée lorsque ledit bit de signe est négatif.

5. Diviseur à non-rétablissement selon la revendication 1, comprenant un moyen de correction de quotient (45) pour corriger une sortie dudit moyen de génération de quotient prédit (14) sur la base du bit de signe du résultat arithmétique et le bit de signe du résultat arithmétique précédent.

6. Processeur vectoriel comprenant un diviseur à non-rétablissement selon la revendication 1, comprenant au moins un circuit d'addition (104), un circuit de multiplication (105) et un circuit de division (106) pour exécuter indépendamment des traitements respectifs d'addition, de soustraction, de multiplication et de division qui sont nécessaires pour des opérations arithmétiques vectorielles,
dans lequel ledit circuit de division (106) comprend un moyen de prétraitement de division et de détermination de type (20) pour exécuter la division de prétraitement et pour traiter la détermination de type pour des données à virgule flottante d'un diviseur (D) et un dividende (N), un moyen arithmétique exponentiel (21) pour exécuter le traitement arithmétique des parties exponentielles dans les données à virgule flottante du diviseur (D) et du dividende (N) prétraité par ledit moyen de prétraitement de division et de détermination de type (20), et un moyen de division de mantisse (40) pour générer des données de mantisse d'un quotient par un traitement de façon répétitive, sur la base d'un algorithme prédéterminé pour la partie de mantisse dans les données de virgule flottante du diviseur (D) et du dividende (N) prétraités par ledit moyen de prétraitement de division et de détermination de type (20).
